(19) **Europäisches Patentamt / European Patent Office / Office européen des brevets**

(11) **EP 4 174 140 B1**

(12) # EUROPEAN PATENT SPECIFICATION

(45) Date of publication and mention
of the grant of the patent:
**03.12.2025 Bulletin 2025/49**

(21) Application number: **22203782.2**

(22) Date of filing: **26.10.2022**

(51) International Patent Classification (IPC):
**C09D 5/14** *(2006.01)* **C09D 7/45** *(2018.01)*
**C09D 7/61** *(2018.01)*

(52) Cooperative Patent Classification (CPC):
**C09D 7/45; C09D 5/14; C09D 7/61;**
C08K 2003/0806

(54) **ANTIBACTERIAL AND ANTIVIRAL COMPOSITION**

ANTIBAKTERIELLE UND ANTIVIRALE ZUSAMMENSETZUNG

COMPOSITION ANTIBACTÉRIENNE ET ANTIVIRALE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **27.10.2021 IT 202100027584**

(43) Date of publication of application:
**03.05.2023 Bulletin 2023/18**

(73) Proprietor: **Nanoprom Chemicals S.r.l.**
**42013 Casalgrande (RE) (IT)**

(72) Inventor: **FALLETI, Gian Luca**
**42013 CASALGRANDE (RE) (IT)**

(74) Representative: **Studio Torta S.p.A.**
**Via Viotti, 9**
**10121 Torino (IT)**

(56) References cited:
**WO-A1-2021/191140 WO-A1-2021/191141**
**CN-A- 107 823 222 CN-A- 109 566 954**
**CN-B- 107 626 154 US-A- 3 556 840**

- JING CHEN ET AL: "Antibacterial polymeric nanostructures for biomedical applications", CHEMICAL COMMUNICATIONS, vol. 50, no. 93, 1 January 2014 (2014-01-01), UK, pages 14482 - 14493, XP055390499, ISSN: 1359-7345, DOI: 10.1039/C4CC03001J

**Description**

CROSS-REFERENCE TO RELATED APPLICATIONS

This patent application claims priority from Italian patent application no. 102021000027584 filed on October 27, 2021 the entire disclosure of which is incorporated herein by reference.

TECHNICAL FIELD

The present invention relates to an antibacterial and antiviral composition for coating hard surfaces which is capable of reducing the risk of contamination and ensuring the safety of people in workplaces in the health, clinical, social, service and hospitality sectors.

BACKGROUND

The ever-increasing need to sanitise and disinfect surfaces to minimise the presence of bacteria and viruses on them is well known.

WO 2021/191140 A1 discloses aqueous antibacterial and antiviral compositions comprising silver micro or nano particles and non-phospholipid lipid vesicles.

To date, many ways have been pursued in an attempt to offer solutions that can counter this phenomenon, working on the development of disinfection systems using chemicals and/or materials with antibacterial properties. Both of these solutions, however, present some problems, both technical and of environmental impact.

Disinfection with chemicals, in fact, requires repeated treatments over a period of time in order to be effective and, for example, in places open to the public, it cannot guarantee that effectiveness will last for as long as the premises are accessible to users.

In addition, the chemicals not only settle on the treated surfaces but are also dispersed in the environment with obvious issues related to pollution and to the dispersion of chemical agents with a residual risk. Finally, some solutions, especially the more aggressive ones, cannot be easily handled by unskilled personnel and require special precautions for their use.

SUMMARY

Aim of the present invention is therefore to provide a new antibacterial and antiviral composition that is free of the above-mentioned disadvantages.

This aim is achieved by a composition according to Claim 1 and a use thereof according to Claim 7.

DESCRIPTION OF EMBODIMENTS

According to a first aspect of the invention, there is provided an antibacterial and antiviral coating composition comprising between 75% and 85% by weight of the total composition of an acrylic resin, at least one cationic surfactant, at least one non-ionic surfactant, colloidal silver, silver-containing liposomes and polyoxymethylmelamine as a UV light reflector.

Hereinafter, the term "UV light reflector" refers to a compound capable of reflecting UV light when illuminated with a UV lamp.

Advantageously, the composition of the invention makes it possible to reduce the risk of contamination by both bacterial and viral agents by contact: it is known, in fact, that viruses can survive on surfaces for several hours (up to 20 hours on copper and up to 80 on plastics), an element that risks transforming practically any type of surface into vectors and source of infection. The greatest risk is related to the dispersion of aerosol droplets that can settle on objects, thus allowing the surface to be transformed into a vehicle for contagion.

In one embodiment, the cationic surfactant is a quaternary ammonium salt, preferably cetrimonium chloride.

In a second embodiment, the non-ionic surfactant is a polyethylene glycol.

Preferably, the colloidal silver is present in an amount between 50 and 100 parts per million of the total composition.

Preferably, the sum of the cationic surfactant and the non-ionic surfactant is between 5 and 10% by weight on the total weight of the composition.

Polyoxymethylmelamine, which is present in the composition, allows to visualize the composition when it is illuminated with a UV light. This property makes it possible to verify on which surfaces or in which portions thereof the composition has been applied, simplifying its application on the remaining portion.

Furthermore, it will no longer be necessary to swab a random portion of the treated surface to check for the presence of viruses and bacteria on the tested surface portion; with the composition of the invention an entire bus or an operating theatre can be examined in a few minutes and immediately, so that if there are points where the composition has been damaged, it will be sufficient to sanitise only that area and reapply the composition.

According to a second aspect of the invention there is provided the use of said composition for coating hard surfaces. The composition of the invention finds particular use for the treatment of hard surfaces such as exhibition halls, retail outlets, schools, canteens, restaurants, offices, doctors' offices, vehicles, gyms and sports equipment and in general all those surfaces present in environments that by their nature are frequented assiduously by several people during the day.

Preferably treated hard surfaces are contaminated by at least one virus or bacterium selected from the group consisting of adenovirus, Escherichia Coli, Staphylococcus Aureus and HCoV-SARS-2.

Further characteristics of the present invention will become apparent from the following description of some merely illustrative and non-limiting examples.

Examples

**EXAMPLE 1.**

The effectiveness of the composition of the invention on viruses was demonstrated using human coronavirus HCoV-OC43 and adenovirus-5 (AdV-5), whereas Escherichia Coli and Staphylococcus Aureus were used for evaluating the activity on bacteria.

The HCoV-OC43 virus has an extremely high structural affinity with the Coronavirus responsible for COVID-19 (HCoV-SARS-2), both phylogenetically and molecularly, in fact both belong to the β-Coronavirus group at an extremely close position in the phylogenetic tree. The homology is such that some antibodies, even highly specific against OC43, also recognize SARS-2. In fact, it has recently been proposed that the immunity achieved by infection with OC43, a virus that is widespread in the population, may also partially protect against the infection with SARS-2. This indicates how the proteins, which are the main constituent of the viral particle scaffolding and determine its resistance, are extremely similar between the two viruses. Since the germicidal treatments act by non-specific mechanisms, morphologically similar viruses respond superimposably to inactivation. Therefore, HCoV-OC43 has been used in several viral persistence/inactivation studies as a surrogate model for the highly pathogenic Coronaviruses SARS-1, SARS-2 and MERS.

The other viral family studied, AdV-5 has remarkable resistance to environmental factors and physical-chemical treatments. It is a virus that is transmitted through droplets of saliva and by contact of the hands with surfaces contaminated by respiratory secretions.

Staphylococcus aureus (ATCC 6538P), as a prototype Gram-positive bacterium, and Escherichia coli (ATCC 10536), as a prototype Gram-negative bacterium, were used to study antibacterial characteristics. Both species have remarkable resistance to both environmental stress and chemical-physical treatments.

In particular, Staphylococcus aureus is a ubiquitous species, provided with an ever-increasing drug-resistance to B-lactam antibiotics (around 90% of the strains), to synthetic penicillins and vancomycin (around 30% of the strains), thus representing a major health problem, especially as an aetiological agent of care-related infections.

For Escherichia coli, too, strains with increased drug-resistance spectrum (B-lactams, second- and third-generation cephalosporins, fluoroquinolones, etc.), which make them potentially dangerous microorganisms at both nosocomial and community levels, are increasingly being isolated.

With regard to the evaluation of the activity on viruses, the study design followed the recommendations set out in ISO 21702:2019 (where applicable).

For the evaluation of the antibacterial activity, the reference ISO was ISO 22196:2011. This method provides a quantitative measure of the effectiveness of the antibacterial activity. In particular, the amount of bacteria with which the material sample is inoculated is calculated at the beginning of the test and subsequently after a 2-hour and 24-hour contact period with the sample. The comparison between the two amounts provides a percentage index R of effectiveness of the antimicrobial material.

The test consists of the following steps:

- Preparation of the microbial suspension for use as an inoculum;
- Inoculation of the microorganisms, in triplicate, on untreated control specimens and on specimens treated with the composition of the invention, and covering the inoculum with a sterile film;
- Incubation for 2 hours at 35°C under humidity conditions or incubation for 24 hours at 35°C under humidity conditions;
- Determination of the microbial count present on the surface of the various treated and control specimens after incubation, by washing the specimens with neutralising agent (10 ml) and serial dilutions for plate count with Plate Count Agar culture medium;

- Evaluation and interpretation of the results and calculation of the antibacterial activity of the treated material.

The size of the inoculum is between $2.5 \times 10^5$ and $1.0 \times 10^6$ cfu/ml.

The following cultural media were used to perform the experimental test:

- PBS for the preparation of microbial suspensions of the standard strains used and for serial dilutions;
- Plate Count Agar for the Petri dish inclusion seeding method;
- Neutralising diluent appropriate to the antimicrobial test for dilutions in the final steps of the test.

The effectiveness of the composition of the invention is measured by comparing the degree of survival of the bacteria contacted with the treated and untreated samples.

For this purpose, Escherichia coli and Staphylococcus aureus bacteria are cultivated in a solution defined nutrient broth (PBS). An aliquot of such culture is contacted with at least three samples with a surface treated with the composition of the invention. Another aliquot of culture is contacted with other untreated samples.

All samples are therefore divided into 50x50 mm sized portions, inoculated with bacterial culture and covered with a 40x40 mm sized sterile film.

The samples with the bacterial culture are incubated for 2 hours or for 24 hours at 35°C and saturation humidity (>90%). After the various incubation times have elapsed, the samples are spiked with 10 ml of neutralising broth and an aliquot of the neutralising liquid obtained by washing the samples is used for microbial count, using the Agar medium inclusion method. The samples of untreated material undergo the same incubation process described above. The colony-forming units are then enumerated using an appropriate microbiological counting technique.

The results related to the abatement of the above-mentioned species 2 hours or 24 hours after treatment of the surface with the composition of the invention are summarised in the tables below. In particular, from the results of the microbial count, the antibacterial activity R of the material subjected to the test is calculated using the equation reported in the ISO 22196:2011 method.

Table 1

| Virus | Abatement % after 2 hours |
|---|---|
| HCoV-OC43 | 95.00 |
| AdV-5 | 99.90 |

Table 2

| Bacterium | Abatement % after 2 hours |
|---|---|
| Escherichia Coli | 93.98 |
| Staphylococcus Aureus | 92.67 |

Table 3

| Bacterium | Abatement % after 24 hours |
|---|---|
| Escherichia Coli | 99.99 |
| Staphylococcus Aureus | 99.99 |

**EXAMPLE 2.**

The aim of this test was to determine the antiviral activity of the composition of the invention on plastic and non-porous materials, using the viral strain SARS-CoV-2_COV2019 ITALY/INMI1, responsible for the current Covid-19 pandemic, according to ISO 21702:2019 (ISO 21702:2019 "Measurement of antiviral activity on plastics and other non-porous surfaces"). The standards ISO 18184 "Determination of Antiviral Activity of Textile Products" and ISO 21702 "Determination of antiviral activity on plastics and other non-porous surfaces" provide a quantitative analysis method to evaluate the antiviral performance of surfaces of different nature and/or treatments.

The evaluation of the antiviral activity of the samples consists of the quantitative analysis of the residual infectious viral load after the contact timeframes (T), to be compared with the initial load resulting from the first immediate recovery after inoculation on an untreated sample. For each analysis timeframe (T) the results for the treated samples and those for the untreated control samples are compared. The final values for the evaluation of the antiviral activity of the treated sample are expressed according to the standards with an index "R" relative to standard ISO 21702. In addition, the percentages of viral load abatement with respect to the initial load at time T0 resulting from the inoculum on the untreated sample are reported.

The antiviral activity was calculated using the following formula:

$$R = Ut - At$$

where

R is the antiviral activity
Ut is the mean of log $TCID_{50}/cm^2$ of the 3 untreated samples at time Tx
At is the mean of log $TCID_{50}/cm^2$ of the 3 treated samples at time Tx
Log $TCID_{50}$ inoculated: 6.5
$TCID_{50}$: the virus concentration required to cause infection of 50% of the cells in a cell culture.

The samples (50x50mm plastic plates) were first disinfected with 70% EtOH, then covered with the composition of the invention and finally inoculated with a volume of 400μL, with the viral strain SARS-CoV-2_COV2019 ITALY/INMI1. The experiment involves a contact time of 2 and 6 hours.

Preliminarily, a cytotoxicity test was performed, the results of which are shown in the tables below. The test is valid if the result is between $2.5 \times 10^5$ - $1.2 \times 10^6$ ($TCID_{50}/cm^2$).

Table 4

| | time | Mean Log $TCID_{50}$ | $TCID_{50}$/1 ml | N ($TCID_{50}/cm^2$) | Ut | R (Ut-At) |
|---|---|---|---|---|---|---|
| Untreated sample | T0 | 5.00 | $10^{5.00}$ | $6.25 \times 10^5$ | n.d. | n.d. |
| | T2 | 4.83 | $10^{4.83}$ | $4.26 \times 10^5$ | 5.63 | n.d. |
| | T6 | 4.50 | $10^{4.50}$ | $1.98 \times 10^5$ | 5.30 | n.d. |
| | T6 | 1.50 | $10^{1.50}$ | $1.98 \times 10^2$ | 2.30 | 3.00 |

Table 5

| | time | Mean Log $TCID_{50}$ | $TCID_{50}$/ 1 ml | N ($TCID_{50}/cm^2$) | At | R (Ut - At) | %reduction on T0 |
|---|---|---|---|---|---|---|---|
| Treated | T2 | 2.08 | $10^{2.08}$ | $7.57 \times 10^2$ | 2.88 | 2.75 | 99.88 |
| sample | T6 | 1.50 | $10^{1.50}$ | $1.98 \times 10^2$ | 2.30 | 3.00 | 99.97 |

The analysis of the data reported in the tables shows the high effectiveness of the composition of the invention in abating the viral concentration already 2 hours after application (>99.80).

**Claims**

1. - An antibacterial and antiviral coating composition comprising between 75% and 85% by weight of the total composition of an acrylic resin, at least one cationic surfactant, at least one non-ionic surfactant, colloidal silver, silver-containing liposomes and polyoxymethylmelamine.

2. - Composition according to Claim 1, **characterized in that** said cationic surfactant is a quaternary ammonium salt.

3. - Composition according to Claim 2, **characterized in that** said quaternary ammonium salt is cetrimonium chloride.

4. - Composition according to Claim 1, **characterised in that** said non-ionic surfactant is a polyethylene glycol.

5. - Composition according to Claim 1, **characterized in that** said colloidal silver is present in an amount between 50 and 100 parts per million of the total composition.

6. - Composition according to Claims 1 to 4, **characterized in that** the sum of said cationic surfactant and said non-ionic surfactant is between 5 and 10% by weight on the total weight of the composition.

7. - Use of the composition according to any one of Claims 1 to 6 for coating hard surfaces.

8. - Use of the composition according to Claim 7 wherein said hard surfaces are contaminated by at least one virus or bacterium selected from the group consisting of adenovirus, Escherichia Coli, Staphylococcus Aureus and HCoV-SARS-2.

**Patentansprüche**

1. Antibakterielle und antivirale Beschichtungszusammensetzung, die zwischen 75 und 85 Gew.- % der Gesamtzusammensetzung eines Acrylharzes, mindestens ein kationisches Tensid, mindestens ein nichtionisches Tensid, kolloidales Silber, silberhaltige Liposomen und Polyoxymethylmelamin umfasst.

2. Zusammensetzung nach Anspruch 1, **dadurch gekennzeichnet, dass** das kationische Tensid ein quaternäres Ammoniumsalz ist.

3. Zusammensetzung nach Anspruch 2, **dadurch gekennzeichnet, dass** das quaternäre Ammoniumsalz Cetrimoniumchlorid ist.

4. Zusammensetzung nach Anspruch 1, **dadurch gekennzeichnet, dass** das nichtionische Tensid ein Polyethylenglykol ist.

5. Zusammensetzung nach Anspruch 1, **dadurch gekennzeichnet, dass** das kolloidale Silber in einer Menge zwischen 50 und 100 ppm der Gesamtzusammensetzung vorliegt.

6. Zusammensetzung nach den Ansprüchen 1 bis 4, **dadurch gekennzeichnet, dass** die Summe des kationischen Tensids und des nichtionischen Tensids zwischen 5 und 10 Gew.- %, bezogen auf das Gesamtgewicht der Zusammensetzung, beträgt.

7. Verwendung der Zusammensetzung nach einem der Ansprüche 1 bis 6 zur Beschichtung harter Oberflächen.

8. Verwendung der Zusammensetzung nach Anspruch 7, wobei die harten Oberflächen mit mindestens einem Virus oder Bakterium kontaminiert sind, das aus der Gruppe ausgewählt ist, die aus Adenovirus, Escherichia Coli, Staphylococcus Aureus und HCoV-SARS-2 besteht.

**Revendications**

1. - Composition de revêtement antibactérienne et antivirale comprenant entre 75 et 85 % en poids de la composition totale d'une résine acrylique, d'au moins un agent tensioactif cationique, d'au moins un agent tensioactif non ionique, d'argent colloïdal, de liposomes contenant de l'argent et de polyoxyméthylmélamine.

2. - Composition selon la revendication 1, **caractérisée en ce que** ledit tensioactif cationique est un sel d'ammonium quaternaire.

3. - Composition selon la revendication 2, **caractérisée en ce que** ledit sel d'ammonium quaternaire est le chlorure de cétrimonium.

4. - Composition selon la revendication 1, **caractérisée en ce que** ledit tensioactif non ionique est un polyéthylène glycol.

5. - Composition selon la revendication 1, **caractérisée en ce que** ledit argent colloïdal est présent dans une quantité comprise entre 50 et 100 parties par million de la composition totale.

**6.** - Composition selon les revendications 1 à 4, **caractérisée en ce que** la somme dudit tensioactif cationique et dudit tensioactif non ionique est comprise entre 5 et 10 % en poids sur le poids total de la composition.

**7.** - Utilisation de la composition selon l'une quelconque des revendications 1 à 6 pour le revêtement de surfaces dures.

**8.** - Utilisation de la composition selon la revendication 7, lesdites surfaces dures étant contaminées par au moins un virus ou une bactérie choisi(e) dans le groupe constitué par l'adénovirus, Escherichia Coli, staphylocoque doré et HCoV-SARS-2.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102021000027584

- WO 2021191140 A1